# EUROPÄISCHE PATENTSCHRIFT

(11) **EP 1 031 056 B1**
(45) Veröffentlichungstag und Bekanntmachung des Hinweises auf die Patenterteilung: **01.06.2005**
(21) Anmeldenummer: 97953680.2
(22) Anmeldetag: 11.11.1997
(51) Int. Cl.: G02B 21/24, G02B 21/22

(54) **NACHRÜSTBARES TUBUSZWISCHENSTÜCK**
RETROFITTABLE TUBULAR INTERMEDIARY ELEMENT
PIECE INTERMEDIAIRE TUBULAIRE ADAPTABLE

(30) Priorität: 12.11.1996 CH 279196
(43) Veröffentlichungstag der Anmeldung: 30.08.2000
(73) Patentinhaber: Leica Microsystems (Schweiz) AG, 9435 Heerbrugg (CH)
(72) Erfinder: GRÄFENHAIN, Paul, CH-9435 Heerbrugg (CH); ROTTERMANN, Ruedi, CH-9442 Berneck (CH)
(74) Vertreter: Rosenich, Paul, Dipl.-Ing.
(86) Internationale Anmeldenummer: PCT/EP1997/006295
(87) Internationale Veröffentlichungsnummer: WO 1998/021616

(56) Entgegenhaltungen:
- DE-A- 3 117 254
- DE-B- 1 098 233
- US-A- 4 175 826
- US-A- 4 299 439
- US-A- 5 177 636
- US-A- 5 532 872

## Beschreibung

Die Erfindung betrifft ein nachrüstbares Tubuszwischenstück für ein Mikroskop, insbesondere für ein Stereomikroskop nach dem Oberbegriff des Anspruches 1.

Eine einwandfreie Beobachtung mittels Mikroskopen oder Stereomikroskopen erfordert, daß der Beobachter die Pupille seines Auges in die Austrittspupille des jeweiligen Okulars bringt. Durch die austretende optische Achse des Gerätes ist ihm auch gleichzeitig eine Blickrichtung aufgezwungen. Unterschiedliche Beobachtungsaufgaben - z.B. Objektabmessungen, adaptiertes Zubehör, Art der Aufstellung und Höhe der Aufstellfläche für das Mikroskop - sowie anatomische Gegebenheiten, beispielsweise Körperabmessungen des Beobachters, führen somit zu aufgezwungenen Sitzpositionen und Körperhaltungen, die aus ergonomischer Sicht nicht immer als empfehlenswert erscheinen. Die Erfindung beschäftigt sich mit einem Tubuszwischenstück, das das Einstellen des Winkels des Tubus relativ zum Lot erlaubt, so daß eine ergonomische Tubuseinstellung gefunden werden kann.

### 1. Stand der Technik

Für Mikroskope mit abnehmbarem Tubus sind sogenannte "Ergotuben" bekannt, mit denen die Einblickrichtung und/oder die Einblickhöhe verändert werden kann. Diese Ergotuben sind im allgemeinen relativ teuer und haben weiterhin den Nachteil, daß bei einer nachträglichen Adaption der bis dahin verwendete feste Tubus mit seinen Funktionselementen zur Erzeugung eines reellen Zwischenbildes (Tubuslinse, Umlenkprisma, ggf. auch Strahlauftellung) und zur Einstellung des Augenabstandes überflüssig wird, da die bekannten Ergotuben alle diese Bauteile umfassen. Sie sind somit keine Zwischenstücke, sondern andere, ergonomischere Tuben, die die unergonomischen vollständig ersetzen.

Die US 4 175 826 offenbart einen solchen Ergotubus. Das ist ein verschwenkbarer Tubus, der auf einen Mikroskopkörper aufsetzbar ist. Er kann nicht sinnvoll als Nachrüstung für einen bestehenden Tubusaufbau benutzt werden, sondern nur als Ersatz eines bestehenden Tubus. Zwischen zwei Umlenkspiegeln befinden sich ein Dachkantprisma, das der Bildumkehr dient, und eine darauf montierte Optik.

Die DE 7 931 427 U bzw. die korrespondierende US 4 299 439 beschreibt demgegenüber ein zwischen Objektivrevolver und Mikroskoptubus einsetzbares Zwischenstück, mit dem der vorhandene Tubus weiterhin verwendet und insbesondere die Einblickhöhe verändert werden kann. Dieses Zwischenstück kann somit zum Nachrüsten bestehender Mikroskope eingesetzt werden. Da das Ziel der der DE 7 931 427 U zugrunde liegenden Aufgabe die Schaffung eines Zwischenstückes zur Höhenverstellung der Okulare war, bleibt bei dieser bekannten Konstruktion die Änderung des Einblickwinkels relativ gering. Dieses Zwischenstück erfordert nachteiligerweise - aufgrund seiner großen Baulänge - eine zwischenabbildende Optik, die neben den zusätzlichen Kosten für das Linsensystem auch Vignettierungs- und/oder Randschärfenprobleme bringen könnte. Bei der Verwendung In Stereomikroskopen verdoppelt sich der Aufwand offensichtlich noch hinsichtlich eines zweiten zusätzlichen Linsensystems für den zweiten Strahlengang.

Der voluminöse Aufbau und die stark außermittige Gewichtsverteilung der Bauteile führen zu weiteren Nachteilen. Die Fachwelt ging damals offensichtlich einen Irrweg, indem sie das zusätzliche Zwischenbild als vorteilhaft anpries. Das beim Bekannten erforderliche zusätzliche reelle Zwischenbild kann jedoch nachteiligerweise zu einer Verschlechterung des Kontrastes führen.

Weiterhin erscheint die als vorteilhaft beschriebene Bildumkehr technologisch insofern überholt, als bei den meisten heutigen Mikroskopen bereits an anderer, geeigneterer Stelle - z.B. im Binokulartubus - eine Bildumkehr vorgesehen ist, so daß die Verwendung des bekannten Zwischenstücks wieder zu einem kopfstehenden und seitenverkehrten Bild führt.

Eine weitere bekannte Möglichkeit die Einblicksituation zu verändern, besteht in der Verwendung eines austauschbaren keilförmigen Tubuszwischenstückes, das im allgemeinen ein Prisma mit zwei Reflexionsflächen enthält. Eine solche Einrichtung erfordert zwar nur geringen mechanischen Aufwand, hat aber den Nachteil, daß weder Einblickwinkel noch Einblickhöhe stufenlos verstellt werden können. Der Komfortgewinn beschränkt sich somit wieder auf nur eine einzige Anwender- bzw. Beobachtersituation.

### 2. Ziel der Erfindung

Die vorliegende Erfindung hat zum Ziel, ein kompaktes Tubuszwischenstück zu schaffen, das es gestattet, Mikroskope/Stereomikroskope mit abnehmbarem Tubus unter minimalem Aufwand nachträglich ergonomisch in der Weise zu verbessern, daß vorzugsweise die Einblickrichtung - und damit indirekt auch die Einblickhöhe - stufenlos verändert werden kann, wobei die Nachteile der für diesen Zweck bisher verwendeten Aufbauten zu vermeiden sind.

Der Erfindung liegt somit die Aufgabe zugrunde, ein nachrüstbares Zwischenstück für einen Mikroskoptubus - insbesondere an einem Stereomikroskop - zu schaffen, das klein und billig baut und einen großen Winkeleinstellbereich erlaubt.

Gelöst wird diese Aufgabe durch die Kombination der Merkmale des Anspruches 1. Da Unter- Und Oberteil der Einrichtung flach, etwa gleich groß und relativ klein ausgebildet sind, erlauben sie zusammen mit den nahe beieinander liegenden Umlenkspiegeln eine sehr kompakte Bauweise, die einen großen Winkeleinstellbereich ermöglicht.

Besondere Ausgestaltungen der Erfindung, sowie Varianten dazu sind in den abhängigen Ansprüchen, der nachfolgenden Beschreibung, den Figuren und der dazugehörenden Beschreibung angegeben.

### 3. Prinzipieller Aufbau eines Tubuszwischenstückes gemäß der vorliegenden Erfindung.

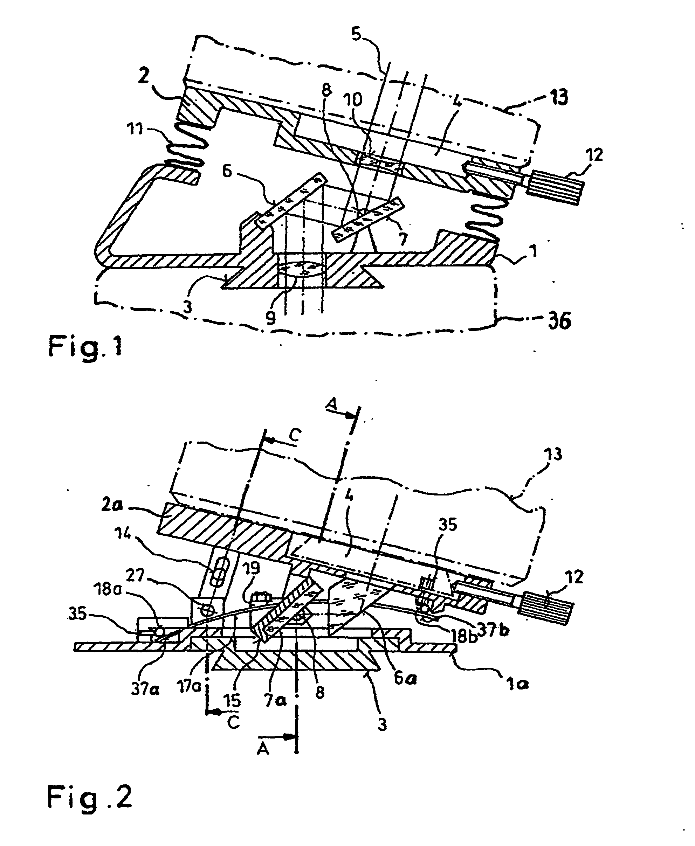

Zur Erhaltung des bereits vom Mikroskop erzeugten aufrechten und seitenrichtigen Zwischenbildes ist grundsätzlich eine gerade Anzahl reflektierender Flächen (vorteilhaft: zwei) erforderlich. Bei Stereomikroskopen mit zwei nebeneinanderliegenden Strahlengängen ist es aus Gründen einer einfacheren Justierung zweckmäßig, daß sich diese Flächen über beide Strahlengänge erstrecken, wobei die für eine einwandfreie Reflexion u.U. erforderlichen reflektierenden Beschichtungen auf die von den Strahlengängen genutzten Bereiche begrenzt sein können. Das einen herkömmlichen Tubus aufnehmende Oberteil mit Tubusanschluß ist gegenüber dem am Mikroskop ansetzbaren Unterteil um eine zur optischen Achse senkrechte Achse drehbar gelagert, wobei diese Drehachse bevorzugt durch des Umlenkpunkt eines der beiden Umlenkspiegel gebt. Ein solches zwischen Mikroskop und Tubus angeordnetes Zwischenstück vergrößert nun die optische Weglänge des an dieser Stelle im allgemeinen parallelen Strahlenganges. Der dadurch entstehenden Gefahr des Verlustes an Randhelligkeit des Bildes bis hin zur Vignettierung kann, gemäß einer besonderen Ausgestaltung der Erfindung - falls erforderlich - dadurch begegnet werden, daß das Zwischenstück eingangsseitig mit einer Konvex- bzw. Positivlinse und ausgangsseitig mit einer Konkav- bzw. Negativlinse ausgestattet wird (Fig. 1).

Im Unterschied zu dem in dem DE 7 931 427 U beschriebenen Zwischenstück wird jedoch kein reelles Zwischenbild erzeugt und es erfolgt somit auch keine Bildumkehr. Durch die Kombination Konvex- bzw. Positivlinse/Konkav- bzw. Negativlinse könnte jedoch die Gesamtvergrößerung des Mikroskops verändert und das abgebildete Objektfeld reduziert werden, was in vielen Fällen unerwünscht sein könnte.

In einer weiter verbesserten, besonders vorteilhaften Ausführung der vorliegenden Erfindung wird dieser Nachteil dadurch vermieden, daß als einer der beiden Umlenkspiegel die Reflexionsfläche eines Prismas aus einem Werkstoff mit hoher Brechkraft aufgebaut ist, wodurch die Vergrößerung der optischen Weglänge in vertretbaren Grenzen gehalten wird und somit auf die zusätzlichen Linsen verzichtet werden kann.

Besonders günstig ist es, das Prisma fest am winkelbeweglichen Oberteil zu befestigen.

Durch das Verlegen der Schwenkachse des Oberteils in die Reflexionsfläche des ersten Umlenkspiegels oder in jene des zweiten Umlenkspiegels lassen sich die Verhältnisse Winkelverstellung zu Höhenverstellung je nach Bedarf wählen, ist die Schwenkachse für den Oberteil und für den ersten Umlenkspiegel in der ersten Reflexionsfläche, ergibt sich gegenüber einer Variante, bei der die Schwenkachse für Oberteil und Umlenkspiegel in der zweiten Reflexionsfläche liegt, der Vorteil, daß eine Veränderung des Einblickwinkels mit einer stärkeren Änderung der Einblickhöhe einhergeht.

### 4. Winkelhalbierendes Federgetriebe

Als winkelhalbierendes Getriebe kann auf herkömmliche Getriebe - z.B. von den erwähnten Ergotuben - zurückgegriffen werden; jedoch sind in den abhängigen Ansprüchen zwei neuartige, erfinderische Getriebe beschrieben. Sie können unabhängig voneinander und jedes für sich auch unabhängig vom oben angegebenen erfinderischen Grundaufbau in selbständig erfinderischer Art eingesetzt werden, z.B. bei der Verstellung von Augenabständen der Tuben eines Stereomikroskops oder dem Verschwenken eines Beobachtungstubus in einer horizontalen Ebene.

Die erwähnten Ergotuben und auch das bekannte Zwischenstück gemäß dem DE 7 931 427 U enthalten Getriebe, die gewährleisten, daß bei einer mechanischen Veränderung des Einblickwinkels durch Verschwenken des Tubus der Strahlengang um einen entsprechenden Winkel mitgeführt wird. Üblicherweise wird eine (oder mehrere) reflektierende Fläche (Umlenkspiegel) durch ein Untersetzungsgetriebe mit dem halben Winkel der Schwenkbewegung des Strahlenganges um ihren Achspunkt geneigt, wobei bevorzugt die Schwenkachse für die Einblickrichtung (für den Tubus) mit der Drehachse für die Spiegelfläche zusammenfällt.

Bekannte Lösungen für solche winkelhalbierenden Getriebe sind z.B. mehrstufige Zahnradgetriebe mit einer nachteiligen Vielzahl von Funktionselementen oder Zugmittelgetriebe, die wegen des notwendigen Achsenabstandes einen relativ großen Platzbedarf haben. All diesen Getrieben ist gemeinsam, daß zum Erfüllen der funktionellen Anforderungen z.B. hinsichtlich Exakthelt des Übersetzungsverhältnisses, hinreichender Spielfreiheit der Lagerungen und Justierbarkeit der optischen Achse ein relativ hoher Aufwand erforderlich ist, der zwangsläufig zu hohen Kosten führt.

Der in DE 1 098 233 C beschriebene binokulare Tubusaufsatz beschreibt z.B. ein Planetengetriebe mit Kegelrädern zur Steuerung eines Spiegels bei Veränderung des Einblickwinkels. Weiterhin wird zur Einstellung des Augenabstandes eine Einrichtung vorgeschlagen, die ebenfalls die Bewegung eines Spiegels mit einem Winkelhalbierungs-Getriebe vorsieht, das in diesem Fall als räumlich wirkendes Hebelgetriebe ausgeführt ist. Dieses Prinzip ist zwar grundsätzlich auch für das Nachführen einer Spiegelfläche bei Veränderung des Einblickwinkels geeignet, die technische Realisierung wird jedoch dadurch erschwert, daß bei der vorliegenden Aufgabenstellung ein wesentlich größerer Bereich für den einzustellenden Winkel gewünscht wird. Mangels zusätzlicher Maßnahmen zur Beseitigung von Fehlern durch Spiel und Toleranzen der Einzelteile ist diese bekannte Lösung daher unzureichend.

Weiterhin sind in DE 3 117 254 C sowie in der JP 42-15419 A ebene Hebelgetriebe beschrieben, die für die Erfindung geeignet erscheinen. Auf den Inhalt der beiden Druckschriften - insbesondere auf die entsprechenden Figuren mit zugehöriger Figurenbeschreibung - wird verwiesen. Auch Kurvengetriebe, wie in DE 2 461 044 B für eine andere Anwendung vorgeschlagen, sind denkbar. All diesen Lösungen ist gemeinsam, daß eine winkeltreue Nachführung des Spiegels mit dem Winkel α/2 nur durch eine präzise Ausführung und Justierung der Funktionselemente erreicht werden kann, was einen entsprechenden Fertigungsaufwand erfordert und somit erfindungsgemäß verbessert werden sollte.

Das in der vorliegenden Erfindung beschriebene und unter Schutz gestellte Federgetriebe hat den Vorteil einer geringen Anzahl einfach herzustellender Funktionselemente. Es besteht im wesentlichen aus dem zum Unterteil drehbar gelagerten Oberteil und dem zwischen diesen beiden, auf der gleichen Achse leichtgängig gelagerten Spiegelträger mit Spiegel. Die Drehlage dieses Spiegelträgers wird durch das Gleichgewicht zwischen den an einem zweiseitigen Hebel, der einem Waagebalken vergleichbar ist, jedoch bei diesem Ausführungsbeispiel als Blattfeder ausgeführt ist, mit der einen Seite Iᵤ und der anderen Seite Iₒ wirkenden Drehmomenten Mᵤ und Mₒ bestimmt. Iᵤ steht dabei für den Teil des Waagebalkens bzw. der Blattfeder, der am Unterteil angreift, während Iₒ für den Teil steht, der am Oberteil angreift. Das Drehmoment Mₒ entsteht durch ein zwischen dem Angriffspunkt am Oberteil und dem Spiegelträger befindliches vorgespanntes Federelement und dem entsprechenden Hebelarm zum Drehpunkt, in gleicher Weise wird das Drehmoment Mᵤ ausgehend von dem Angriffspunkt am Unterteil erzeugt. Eine Winkelbewegung des Oberteils um α bewirkt eine Veränderung des Drehmomentes Mₒ, wodurch am Spiegelträger ein Ungleichgewicht der Drehmomente auftritt, was dazu führt, daß sich der Spiegelträger zwangsläufig soweit bewegt, bis das Gleichgewicht zwischen Mₒ und den entgegenwirkenden Drehmomenten Mᵤ und M_{R} wiederhergestellt ist. M_{R} steht dabei für das Reibungsmoment, daß durch Reibung in den Lagern erzeugt wird. Das entspricht einer Veränderung der Drehlage des Spiegelträgers bzw. des schwenkbaren Spiegels zum Oberteil um Δβₒ und zum Unterteil um Δβᵤ. Durch die erfindungsgemäß symmetrische Anordnung der einzelnen Elemente und entsprechende Parameterwahl ist gewährleistet, daß die beiden Kennlinien Mₒ(βₒ) und Mᵤ(βᵤ) einander gleich sind. Die hinreichend leichtgängige Lagerung des Spiegelträgers (M_{R}<<Mₒ,Mᵤ) sorgt dafür, daß der durch Reibung entstehende Unterschied zwischen Δβᵤ und Δβₒ vernachlässigbar klein bleibt. Mit α = Δβᵤ + Δβₒ) und Δβᵤ = Δβₒ folgt, daß sich der Spiegelträger um den halben Betrag des am Oberteil eingeleiteten Winkels bewegt. Die Ausgangslage und durch eventuelle Restfehler noch vorhandene Unsymmetrien lassen sich mittels einfacher Elemente, z.B. an den beiden Anlenkpunkten, justieren.

Die Erfindung beschränkt sich nicht auf das dargestellte Beispiel einer symmetrischen Blattfeder zur Realisierung des Systems "zweiseitiger Hebel mit je einem Federelement zwischen Hebel und Unter- sowie Oberteil".
Anordnungen mit Zug-, Druck- oder Drehfedern, deren Drehmomentkennlinien bezüglich des Spiegeldrehpunktes in geeigneter Weise in Übereinstimmung gebracht werden, sind gleichermaßen Gegenstand dieser Erfindung. Darin eingeschlossen ist, daß sich zum Ausgleich von Restfehlern notwendige Justierstellen an verschiedenen Orten befinden können. Weiters umfaßt diese an sich unabhängige Erfindung auch andere Anwendungen an Mikroskopen, bei denen etwas um den halben Winkel einer Schwenkbewegung mitgeschwenkt werden soll. Dies können z.B. Augenabstands-Einstellvorrichtungen oder auch optische Anzeigen von optischen Meßgeräten o.dgl. sein.

Diese Erfindung eines neuartigen Winkelhalbierungs-Getriebes reicht darüber hinaus noch wesentlich weiter und kann unabhängig in den verschiedensten Techniken der Mechanik und Physik zum Einsatz gelangen. Der Erfindungsgedanke ist dabei darüber hinaus auch nicht auf eine Winkelhalbierung und auf eine Untersetzung eingeschränkt. Selbstverständlich ließen sich durch Variation des Verhältnisses von Iᵤ zu Iₒ verschiedenste Untersetzungen einstellen. Bei einer Drehmomenteinleitung zwischen Iᵤ und Iₒ ergibt sich umgekehrt eine Winkelübersetzung bei vergleichbarem Ober- und Unterteil.

### 5. Räumliches Hebelgetriebe zur Winkelhalbierung

Zum Nachführen des Umlenkspiegels mit dem halben Betrag der mechanischen Veränderung des Einblickwinkels dient gemäß dieser Variante der Erfindung ein Hebel , dessen Enden im Unterteil und im Oberteil drehbar gelagert sind und von denen wenigstens eines in Richtung der Drehachse verschieblich ist. Da die relative Drehung des Hebels zur Lagerstelle nicht um eine definierte Achse erfolgt, sowie die auf die Drehachse des Zwischenstückes projizierte Länge des Hebels nicht konstant ist, werden die Hebelenden so gestaltet, daß die entsprechenden Freiheitsgrade vorhanden sind, z.B. in Form von Kugelsegmenten, die mit ebenen Stützflächen am Unter- und Oberteil in Kontakt stehen. Diese Anordnung wird besonders unempfindlich gegen Fehlereinflüsse, wenn die Anlageflächen für die Kugelsegmente parallel zur Drehachse zwischen Oberteil und Unterteil sind und die wirksamen Radien von den beiden Endpunkten des Hebels zur Drehachse einander gleich sind. Alternativ zu der angegebenen Lagerung des Hebels könnte dieser auch an seinen beiden Enden verschieblich gehalten sein, während seine Mitte verschiebestarr in bezug auf die Drehachse gehalten ist. Varianten mit Teleskopverstellung des Hebels sind ebenso umfaßt.

Der Antrieb des Spiegelträgers mit Spiegel erfolgt durch einen Taster, der an wenigstens einer Seite des Hebels in dessen Mitte anliegt Es handelt sich vorzugsweise um ein z.B. gabelförmiges Element, wobei für diese Berührungsstelle die gleichen Anforderungen bezüglich der Freiheitsgrade bestehen. Erfindungsgemäß wurde für diese besondere Ausgestaltung auch hier ein Kugelsegment gewählt, so daß der Hebel im Prinzip aus drei auf einer Achse befindlichen Kugelsegmenten besteht. Die Ausbildung der gabelförmigen Abtastfläche am Spiegelträger - als bezüglich der Drehachse parallele Ebene - im Abstand vom Radius des mittleren Kugelsegmentes macht das Übersetzungsverhältnis erfindungsgemäß unempfindlich auf seitliche Verschiebungen des Hebels sowie Abstandsänderungen des mittleren Kugelsegmentes zur Drehachse.

Gemäß einer besonderen Ausgestaltung mittels einer Feder wird der Kontakt zwischen dieser Abtastfläche und dem mittleren Kugelsegment spielfrei aufrecht erhalten. Es könnte auf die Gabel auch verzichtet werden, wenn die Feder stark genug ist, um die Abtastfläche stets spielfrei - auch bei Erschütterungen - an den Hebel bzw. das Kugelsegment anzudrücken, um zu verhindern, daß sich beim Transport der Spiegel unkontrolliert bewegt.

Weitere Federelemente können bei Bedarf für Spielfreiheit der Lagerstellen an den Hebelenden sorgen.

Wird dabei gemäß einer bevorzugten Ausgestaltung eines der Kugelsegmente einseitig abgeflacht und durch ein annähernd ebenes Element mit einer Anpreßkraft beaufschlagt - z.B. in Form einer Blattfeder -, so wird der Hebel an zufälligen Drehungen um seine eigene Achse gehindert und Fluchtungsfehler der drei Kugelsegmente untereinander können sich somit nicht schädlich auf die Winkelhalbierung auswirken.

Durch die Ausführung einer Anlagefläche für ein Kugelsegment als im Abstand vom Kugelradius zur Drehachse parallele Ebene kann diese Stelle in einfacher Weise - z.B. in Form eines zu dieser Fläche senkrechten, axial verstellbaren zylindrischen Bolzens - zum Justieren der Höhenrichtung des austretenden Strahles benutzt werden. Zur Justierung der Seitenrichtung ist es ausreichend, die gemeinsame Drehachse in ihrem Winkel zur optischen Achse zu neigen, z.B. - wie oben beschrieben - mit einem zylindrischen Bolzen oder auch mit einem verstellbaren, einer Blattfeder ähnlichen Element, wobei die Aufrechterhaltung der Parallelität durch ein der Verstellbewegung entgegenwirkendes federndes Element erfolgen kann.

### 6. Figurenbeschreibung

Weitere Details der Erfindung können der Zeichnung entnommen werden. Gleiche Bezugszeichen bedeuten gleiche Bauteile, gleiche Bezugszeichen mit unterschiedlichen Indizes beziehen sich auf funktionsgleiche Bauteile mit unterschiedlichem Aufbau oder unterschiedlicher Position. Die Figuren werden zusammenhängend und übergreifend beschrieben. Die angefügte Bezugszeichenliste ist Bestandteil der Figurenbeschreibung. Die Abmessungen der Bauteile in den Figuren sind annähernd maßstabsgetreu bzw. entsprechen einer bevorzugten Ausbildung. Die Figuren stellen jedoch nur beispielhafte Ausführungsformen dar und schränken die Erfindung nicht ein.

Es zeigen dabei
- Flg.1:: einen schematischen symbolischen Aufbau einer Variante eines erfindungsgemäßen Zwischenstücks;
- Fig. 2:: eine andere Variante im Schnitt mit einem Federgetriebe;
- Fig. 3-6:: Detailschnitte der Fig. 2;
- Fig. 7:: eine dritte Variante mit einem Hebelgetriebe;
- Fig. 8-12:: Detailansichten bzw. Schnitte der Fig. 7;
- Fig. 13:: eine Ansicht eines Mikroskops mit angedeutetern Zwischenstück.

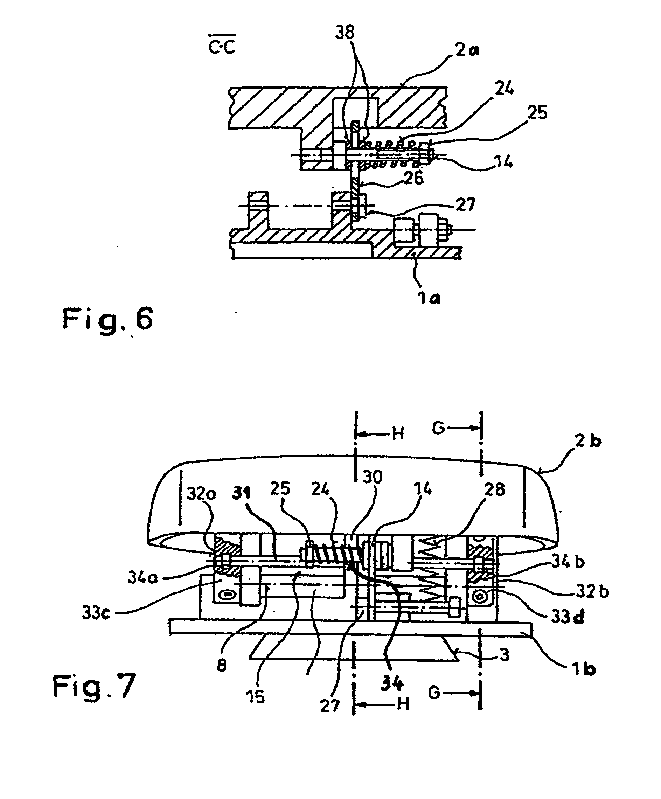

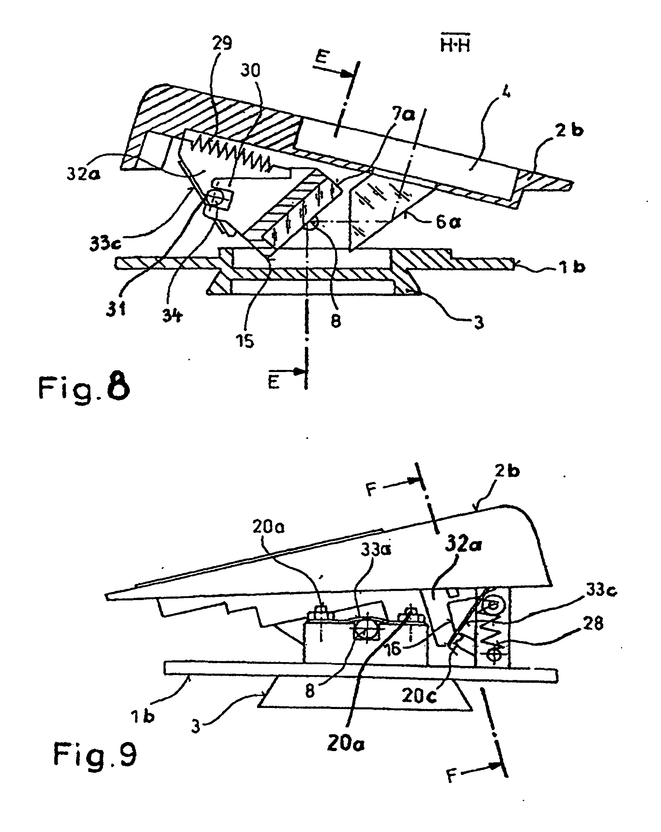

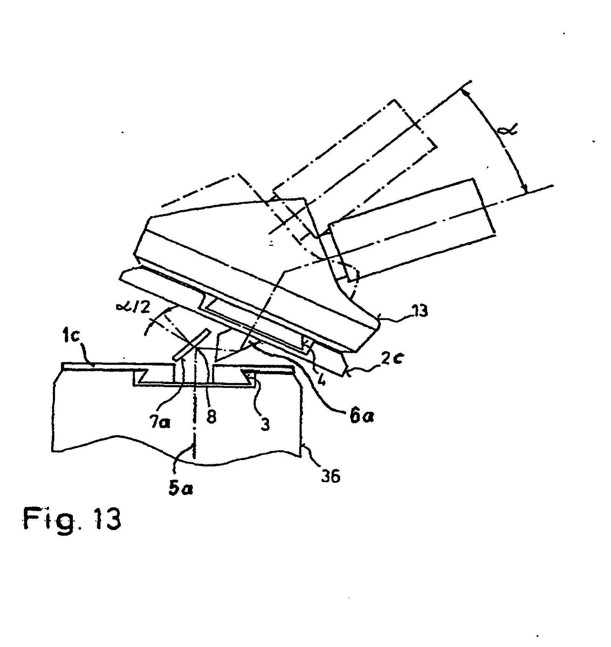

Der symbolische Aufbau gemäß Fig. 1 und die Darstellung einer Variante eines solchen Aufbaus in Fig. 13 verdeutlichen den Kern der Erfindung: Ein relativ kleiner Unterteil 1 und ein relativ kleiner Oberteil 2 (in Fig. 13 anders ausgeformt und deshalb 1c und 2c benannt) sind in ihrer horizontalen Breitenersteckung zur Breite des Mikroskopgehäuses 36 bzw. des Tubus 13 nur unwesentlich unterschledlich. Sie sind mit zwei Umlenkspiegeln 6 und 7 gekoppelt, von denen einer 6 mit dem Unterteil 1 (Fig. 1) oder als 6a mit dem Oberteil 2 (übrige Figuren) starr verbunden ist. Der andere Umlenkspiegel 7 (Fig. 1) bzw. 7a (übrige Figuren) ist, wie in den Figuren 1 und 13 ersichtlich, um die Schwenkachse 8 schwenkbar ausgestaltet. Der Umlenkspiegel 7a ist erfindungsgemäß entweder über ein winkelhalbierendes Getriebe (Blattfeder) 17 (Fig. 2-6) oder über ein Getriebehebel 31 (Fig. 7-12) so mit dem Oberteil 2 schwenkgekoppelt, dass eine Schwenkbewegung des Tubus 13 den Beobachtungsstrahlengang in seiner Relativlage zum Oberteil 2 und dem Tubus 13 unbeeinflusst lässt.
Bei der Variante gemäß Fig. 1 ist der Umlenkspiegel 6 am Unterteil 1 befestigt, während der Umlenkspiegel 7 um eine Schwenkachse 8 schwenkbar ist. Bei den Varianten der Fig. 2 und 8 ist umgekehrt der Spiegel 6a - an einem Prisma ausgebildet - am Oberteil 2a bzw. 2b befestigt.
Da der Unterteil 1 und der Oberteil 2 erfindungsgemäß nahe beisammen liegen, ist der optische Weg innerhalb des Zwischenstückes kurz. Er ist in der Variante gemäß Fig. 1 zudem noch mittels einer Konkav-Linse 10 und einer Konvex-Linse 9 optisch verkürzt.
In Fig. 1 und Fig. 13 ist weiterhin ersichtlich, dass an einem oberen Anschluss 4, der dem Anschluss an einem Mikroskopgehäuse 36 entspricht, der Tubus 13 anschließbar ist, während ein unterer Anschluss 3, der dem Anschluss an einem Tubus 13 entspricht, an einem Mikroskopgehäuse 36 befestigt werden kann.
im Rahmen der Erfindung liegen selbstverständlich auch Varianten, bei denen beide Spiegel in Abhängigkeit von der Schwenkbewegung des Tubus 13 um je einen Viertelwinkel verschwenkt werden, so dass der Beobachtungsstrahlengang in seiner Relativlage zum Oberteil 2 und dem Tubus 13 unbeeinflusst bleibt.
In Fig. 1 ist des Weiteren dargestellt; dass ein Faltenbalg 11 die innere Mechanik bzw. die Umlenkspiegel 6, 7 vor Staub und Fremdlicht schützt.

Fig. 2 bezieht sich auf eine Variante, bei der als Winkelhalbierungs-Getriebe eine erfinderische Konstruktion mit wenigstens einer oder mehreren - im letzteren Fall parallel liegenden - Blattfeder(n) 17a, 17b realisiert ist. (In der dargestellten Ansicht ist nur die Blattfeder 17a sichtbar.) Die Blattfedern sind jeweils am Oberteil 2a und am Unterteil 1a durch verstellbare Federauflager 18a und 18b abgestützt, die symmetrisch zur Schwenkachse 8 angeordnet sind. Mittig - d.h. im Bereich der Schwenkachse 8 - sind die Blattfedern 17a, 17b an einem Spiegelhalter 15 befestigt.
Eine Schwenkbewegung des Oberteils 2a um die Schwenkachse 8 führt somit zu einem Verschwenken des Umlenkspiegels 7a um den halben Schwenkwinkel. Derart wird der Strahlengang an die Schwenkbewegung gekoppelt. Gleichzeitig übernehmen die Blattfedern 17a und 17b gewisse statische und dynamische Kräfte zwischen dem Unterteil 1a und dem Oberteil 2a. Mittels Justierschrauben 35 können die verstellbaren Federauflager 18a und 18b und damit die Federauflagepunkte 37a und 37b höhen- bzw. lagejustiert werden. Eine Bremse 14, die eine einmal gewählte Schwenkposition des auf dem Oberteil 2a sitzenden Tubus 13 hält, dient dem gedämpften Verschwenken und übernimmt durch Reibungskraft auch Haltekräfte.

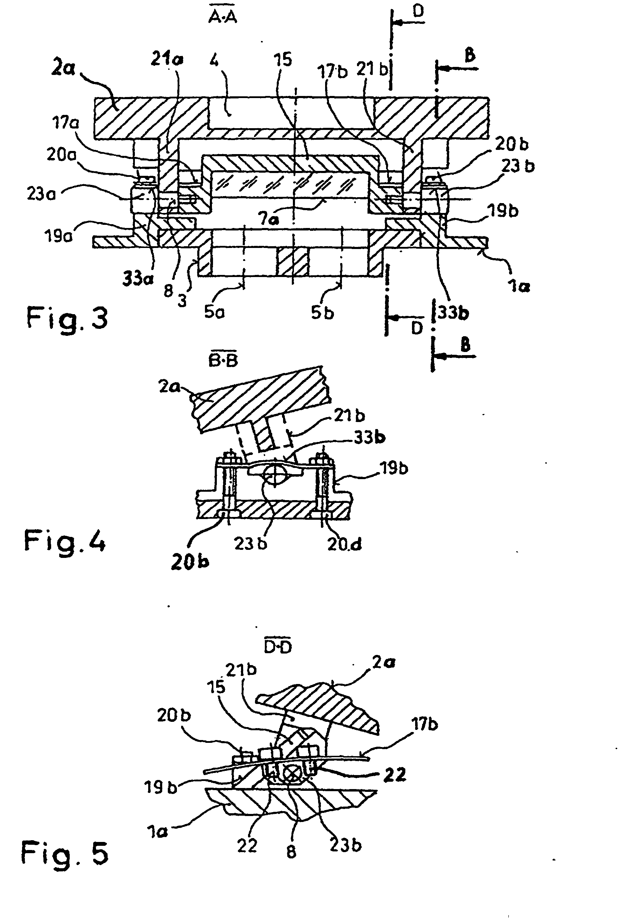

Fig. 3 zeigt, dass die Schwenkachse 8 durch Achsstummel 23a, 23b realisiert ist, die gleichzeitig den Spiegelhalter 15 schwenklagern. Zur Spielfreimachung sind diese mittels Lagerfedem 33a und 33b und Befestigungsschrauben 20a und 20b über einen Lagerbock 19a bzw. 19b mit dem Unterteil 1a verbunden.
Diese Figur zeigt die beiden nebeneinanderliegenden Bohrungen 5a und 5b, die den binokularen Strahlengang eines Stereomikroskops hindurchtreten lassen.

Fig. 4 zeigt in einer seitlichen Detailansicht zu Fig. 3 und gleichzeitig entlang der Schnittebene B-B geschnitten dargestellt, wie der Oberteil 2a gelagert ist. Der Lagerbock 19b fasst mittels der Lagerfeder 33b, die ihrerseits mit den Befestigungsschrauben 20b und 20d befestigt ist, den Achsstummel 23b so, dass der Oberteil 2a schwenkbar ist.

Fig. 5 ist eine Schnittdarstellung entlang der in Fig. 3 gesetzten Schnittebene D-D. Hierbei sieht man die mittige - im Bereich der Schwenkachse 8 liegende - Befestigung der Blattfeder 17b mittels der Halteschrauben 22 am Spiegelhalter 15.

Fig. 6 ist eine Schnittdarstellung entlang der in Fig. 2 gesetzten Schnittebene C-C, die Details zu der Bremse 14 zeigt. Die Bremse 14 umfasst dabei beispielsweise eine Vorspannungseinstellung 25 mit einer Andrückfeder 24 und Reibplatten 38, die an einer Schubstange 26 angedrückt werden. Die Schubstange 26 ist am Unterteil 1a mittels Anlenkpunkt 27 schwenkbar gehalten.

Die Variante gemäß Fig. 7 verzichtet auf die Blattfedern 17a und 17b als Winkelhalbierungs-Getriebe und setzt statt dessen einen Getriebehebel 31 ein, der an seinen beiden Enden über Kugelsegmente 34a und 34b vertügt und in seiner geometrischen Mitte ebenso ein Kugelsegment 34 trägt. An einem Ende ist der Getriebehebel 31 über ein Hebellager 32a am Oberteil 2b geringfügig schwenkbar festgelegt, während er anderenends in einem Hebellager 32b am Unterteil 1b geringfügig schwenkbar festgelegt ist. Ein Nach-oben-Schwenken des Oberteils 2b führt somit zu einem Nach-oben-Schwenken des mittleren Kugelsegments 34 um den halben Weg relativ zum Unterteil 1b gemessen. Da am mittleren Kugelsegment 34 ein gabelförmiger Abtaster 30 angreift, der mit dem Spiegelhalter 15 starr verbunden ist, führt dies zu einer Schwenkbewegung des Spiegels 7a um den halben Verschwenkwinkel des Oberteils 2b. Eine Gewichtsausgleichsteder 28 spannt den Oberteil 2b gegen den Unterteil 1b vor, sodass das Kippmoment, das durch das Verschwenken des Tubus 13 erzeugt wird - z.B. in seiner Lage gemäß Fig. 13 - zum Teil kompensiert wird.

Fig. 8 ist eine Schnittdarstellung entlang der in Fig. 7 gesetzten Schnittebene H-H, die zeigt, dass eine Spielausgleichsfeder 29, die an einem Ende am Spiegelhalter 15 und anderenends am Oberteil 2b festgelegt ist, für gleichmäßiges Anliegen des Abtasters 30 am mittleren Kugelsegment 34 sorgt.

Fig. 9 ist eine Seitenansicht des in Fig. 7 dargestellten Zwischenstücks. Die Stützfläche 16 am Hebellager 32a des Oberteils 2 ist so ausgebildet, daß beim Justieren der Abstand zwischen dem einen Hebelende und der Schwenkachse 8 dem Abstand zwischen dem anderen Hebelende und der Schwenkachse 8 annähernd gleich bleibt.

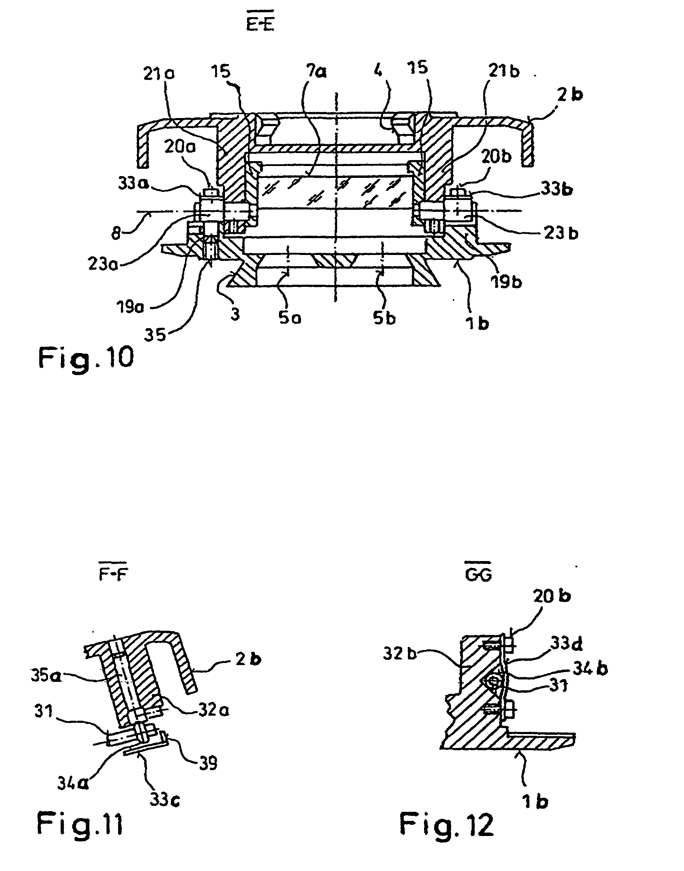

Fig. 10 ist eine Schnittdarstellung entlang der in Fig. 8 gesetzten Schnittebene E-E. Hierbei werden die beiden Strahlengänge 5a und 5b ersichtlich. Der Lagerbock 19a ist mit einer Justierschraube 35 zur Justierung des Lagers ausgestattet.

Fig. 11 ist eine Schnittdarstellung entlang der in Fig. 9 gesetzten Schnittebene F-F. Die Justierschraube 35a mit axial verstellbaren Bolzen dient der Justierung der Höheneinstellung des Endes des Getriebehebels 31 bzw. des Kugelsegments 34a, indem sie eine justierbare Auflagefläche schafft.
Die Lagerfeder 33c ist bei einer besonderen Ausführungsform mit einem abragenden Winkelstück 39 versehen, das das axiale Spiel des Getriebehebels 31 beschränkt und diesen gegebenenfalls axial vorspannt.

Fig. 12 ist eine Schnittdarstellung entlang der in Fig. 7 gesetzten Schnittebene G-G und zeigt, dass das periphere Kugelsegment 34b zur spielfreien Halterung mit einer Lagerfeder 33d befestigt ist.

### Bezugszeichenliste

- 1, 1a-c -: Unterteil
- 2, 2a-c -: Oberteil
- 3 -: Anschluss für Mikroskopgehäuse
- 4 -: Anschluss für Tubus
- 5a-b -: Bohrung für Strahlengang
- 6, 6a -: Umlenkspiegel starr
- 7, 7a -: Umlenkspiegel, schwenkbar
- 8 -: Schwenkachse, Hauptdrehachse
- 9 -: Konvex-Linse
- 10 -: Konkav-Linse
- 11 -: Faltenbalg
- 12 -: Arretierschraube
- 13 -: Tubus
- 14 -: Bremse
- 15 -: Spiegelhalter
- 16 -: Stützfläche
- 17a, b -: Blattfeder als Winkelhalbierungs-Getriebe
- 18a, b -: Verstellbare Federauflager
- 19a, b -: Lagerbock
- 20a-d -: Befestigungsschraube
- 21a, b -: Lagersteg am Oberteil 2
- 22 -: Halteschraube
- 23a, b -: Achsstummel
- 24 -: Andrückfeder
- 25 -: Vorspannungseinstellung
- 26 -: Schubstange
- 27 -: Anlenkpunkt
- 28 -: Gewichtsausgleichsfeder
- 29 -: Spielausgleichsfeder
- 30 -: Abtaster
- 31 -: Getriebehebel
- 32a, b -: Hebellager
- 33a-d -: Lagerfeder
- 34, 34a-b -: Kugelsegment an Getriebehebel
- 35, 35a -: Justierschraube
- 36 -: Mikroskopgehäuse
- 37a, b -: Federauflagepunkte
- 38 -: Reibplatte
- 39 -: Winkelstück

## Patentansprüche

1. Nachrüstbares bzw. entfernbares Tubuszwischenstück mit einem Zwischenstück-Strahleneingang an einem Unterteil (1) und einem Zwischenstück-Strahlenausgang an einem Oberteil (2), bei dem der Winkel zwischen Strahleneingang und Strahlenausgang durch Verschwenken des Unterteils (1) relativ zum Oberteil (2) um eine im Wesentlichen horizontale Schwenkachse (8) variierbar ist, für ein Mikroskop, wobei der Oberteil (2) einen ersten Tubusanschluss (4) für das Verbinden mit einem Tubusstück (13) und der Unterteil (1) einen zweiten gegengleichen Tubusanschluss (3) für das Verbinden mit einem Mikroskopkörper (36) aufweist, und mit zwei Umlenkspiegeln (6, 7) im Strahlengang (5) zwischen dem Zwischenstück-Strahleneingang und dem Zwischenstück-Strahlenausgang, von denen wenigstens einer (6 oder 7) in Abhängigkeit von der Schwenkbewegung des Oberteils (2) mittels Getriebe winkelreduziert schwenkbar ist, **dadurch gekennzeichnet, dass** das Mikroskop ein Stereomikroskop ist und **dass** der Unterteil (1) und der Oberteil (2) etwa gleich groß sind und somit auch das gesamte Tubuszwischenstück in seinen Außenabmessungen die Außenabmessungen des Anschlussbereiches für das Tubusstück (13) bzw. für den Mikroskopkörper (36) nur unwesentlich überragen, und dass die beiden Umlenkspiegel (6, 7) jeweils am Unterteil (1) und Oberteil (2) oder beide am Unterteil (1) oder beide am Oberteil (2) angeordnet sind und mit ihren Reflexionsflächen so nahe beieinander liegen, dass der Raum zwischen den beiden Umlenkspiegeln (6, 7) frei von optischen Bauteilen ist und dass die Distanz zwischen den beiden Umlenkspiegeln (6, 7) die Außenabmessungen der Anschlussbereiche (13, 36) nicht übersteigt.

2. Tubuszwischenstück nach Anspruch 1, **dadurch gekennzeichnet, dass** zur Reduktion der optischen Weglänge im Strahlengang (5) des Zwischenstückes eingangsseitig eine Konvex- bzw. Positivlinse (9) und ausgangsseitig eine Konkav- bzw. Negativlinse (10) angeordnet ist, und/oder dass einer der beiden Umlenkspiegel (6, 7) als Reflexionsfläche an einem Prisma (6a) ausgebildet ist, das bevorzugt aus einem Werkstoff mit hoher Brechkraft aufgebaut ist, wobei dieses Prisma (6a) vorzugsweise am schwenkbaren Oberteil (2a, 2b, 2c) starr angebracht ist.

3. Tubuszwischenstück nach einem der vorhergehenden Ansprüche, **dadurch gekennzeichnet, dass** die Schwenkachse (8) des Oberteils (2) in die Reflexionsfläche eines der Umlenkspiegel (6, 7) - insbesondere in jene des schwenkbaren Umlenkspiegels (7) - gelegt ist, wobei bevorzugt die Schwenkachse des schwenkbaren Umlenkspiegels mit der Schwenkachse (8) des Oberteils (2) zusammenfällt.

4. Tubuszwischenstück nach einem der vorhergehenden Ansprüche, **dadurch gekennzeichnet, dass** die Bewegungsfreiheit des Unterteils (1) und des Oberteils (2) zueinander durch eine - vorzugsweise justierbare - Bremse (14) gebremst ist, und/oder dass als Gewichtsausgleich für infolge Winkelverstellung außermittig gelangende Tubusmassen zwischen dem Unterteil (1) und dem Oberteil (2) eine Gewichtsausgteichsfeder (28) angeordnet ist.

5. Tubuszwischenstück nach einem der vorhergehenden Ansprüche, **dadurch gekennzeichnet, dass** das Getriebe als räumliches Hebelgetriebe mit einem in Mittelschwenkstellung etwa parallel zur Schwenkachse (8) liegenden Getriebehebel (31) ausgebildet ist, der an einem Ende am Unterteil (1) und anderenends am Oberteil (2) spielfrei gelagert ist, wobei der Hebel (31) in seiner mechanisch wirksamen Mitte mit einem Kugelsegment (34) versehen ist, an dem ein Winkelabtaster (30) angreift, der den schwenkbaren Umlenkspiegel (7) abhängig von einer Schwenkbewegung des Oberteils (2) zum Unterteil (1) direkt oder indirekt schwenkt.

6. Tubuszwischenstück nach Anspruch 5, **dadurch gekennzeichnet, dass** dem Getriebehebel (31) zur Unschädlichmachung von Rundlauffehlern bzw. zur Verhinderung einer zufälligen Drehung um seine eigene Achse eine Drehsicherung zugeordnet ist.

7. Tubuszwischenstück nach einem der Ansprüche 1 bis 4, **dadurch gekennzeichnet, dass** das Getriebe wenigstens einen oder mehrere federnd abgestützte(n) Hebelarm(e) umfasst, von denen wenigstens einer etwa mittig mit der Drehachse (8) des schwenkbaren Umlenkspiegels (7) verbunden ist, wobei vorzugsweise der (einer der) Hebelarm(e) an einem Ende federkraftschlüssig mit dem Oberteil (2) und anderenends federkraftschlüssig mit dem Unterteil (1) verbunden ist.

8. Tubuszwischenstück nach einem der Ansprüche 1 bis 4 oder 7, **dadurch gekennzeichnet, dass** das Getriebe als Federgetriebe aufgebaut ist und eine etwa senkrecht zur Schwenkachse (8) erstreckte Blattfeder (17) umfasst, die an einem Ende am Unterteil (1) und anderenends am Oberteil (2) symmetrisch zur Schwenkachse (8) des Umlenkspiegels (7) abgestützt und deren Mitte direkt oder indirekt am Umlenkspiegel (7) befestigt ist.

9. Tubuszwischenstück nach einem der Ansprüche 5 oder 6, **dadurch gekennzeichnet, dass** der (wenigstens einer der) Getriebehebel (31) selbst als Blattfeder (17) ausgebildet ist.

10. Tubuszwischenstück nach Anspruch 7 oder 8, **dadurch gekennzeichnet, dass** der schwenkbare Spiegel (7) bzw. dessen Spiegelträger (15) und/oder wenigstens ein Federauflager (37) durch geeignete Mittel - insbesondere Kugel- oder Nadellager - reibungsarm gelagert ist.

11. Tubuszwischenstück nach einem der vorhergehenden Ansprüche, **dadurch gekennzeichnet, dass** dem Getriebe wenigstens eine Einrichtung zur Spielbeseitigung und/oder wenigstens eine Justiermöglichkeit für die Höhenrichtung des durch die beiden Umlenkspiegel (6, 7) abgelenkten Strahlengangs (5) - insbesondere durch eine Verschiebemöglichkeit einer Anlagefläche für ein Getriebeglied - zugeordnet ist, und/oder dass zur Justierung der Seitenrichtung des austretenden Strahlengangs (5) Mittel zum Verändern der Neigung der Hauptdrehachse (8) des Zwischenstücks vorgesehen sind.

12. Tubuszwischenstück nach einem der vorhergehenden Ansprüche, **dadurch gekennzeichnet, dass** die beiden Umlenkspiegel (6, 7) so breit sind, dass sie beide Strahlengänge (5a, b) eines Stereomikroskops erfassen und umlenken.

## Claims

1. Retrofittable or removable tube adapter comprising an adapter beam entrance on a lower part (1) and an adapter beam exit on an upper part (2), in which the angle between beam entrance and beam exit is variable by pivoting of the lower part (1) relative to the upper part (2) about a substantially horizontal pivot axis (8), for a microscope, the upper part (2) having a first tube connection (4) for connection to a tube piece (13) and the lower part (1) having a second diametrically opposed tube connection (3) for connection to a microscope body (36), and comprising two deflection mirrors (6, 7) in the beam path (5) between the adapter beam entrance and the adapter beam exit, at least one (6 or 7) of which is pivotable as a function of the pivot movement of the upper part (2) by means of a gear with angle reduction, **characterized in that** the microscope is a stereomicroscope and that the lower part (1) and the upper part (2) are of about the same size and furthermore the external dimensions of the entire tube adapter therefore only insignificantly exceed the external dimensions of the connection region for the tube piece (13) or for the microscope body (36), and that the two deflection mirrors (6, 7) are arranged in each case on the lower part (1) and upper part (2) or both on the lower part (1) or both on the upper part (2) and are located with their reflecting surfaces so close together that the space between the two deflection mirrors (6, 7) is free of optical components, and that the distance between the two deflection mirrors (6, 7) does not exceed the external dimensions of the connection regions (13, 36).

2. Tube adapter according to Claim 1, **characterized in that**, for reducing the optical distance in the beam path (5) of the adapter, a convex or positive lens (9) is arranged on the entrance side and a concave or negative lens (10) on the exit side, and/or that one of the two deflection mirrors (6, 7) is in the form of a reflecting surface on a prism (6a) which is preferably formed from material having a high refractive power, this prism (6a) preferably being rigidly mounted on the pivotable upper part (2a, 2b, 2c).

3. Tube adapter according to any of the preceding Claims, **characterized in that** the pivot axis (8) of the upper part (2) is located in the reflecting surface of one of the deflection mirrors (6, 7), in particular **in that** of the pivotable deflection mirror (7), the pivot axis of the pivotable deflection mirror preferably coinciding with the pivot axis (8) of the upper part (2).

4. Tube adapter according to any of the preceding Claims, **characterized in that** the freedom of movement of the lower part (1) and of the upper part (2) relative to one another is braked by a - preferably adjustable - brake (14), and/or that a weight-compensating spring (28) is arranged, between the lower part (1) and the upper part (2), as a weight-compensating means for tube masses which are off-centre owing to angle adjustment.

5. Tube adapter according to any of the preceding Claims, **characterized in that** the gear is in the form of a three-dimensional lever gear having a gear lever (31) which is located in a middle pivot position approximately parallel to the pivot axis (8) and which is mounted in a play-free manner on the lower part (1) at one end and on the upper part (2) at the other end, the lever (31) being provided, in its mechanically effective middle, with a sphere element (34) which is engaged by an angle sensor (30) which, depending on a pivot movement of the upper part (2) relative to the lower part (1) directly or indirectly pivots the pivotable deflection mirror (7).

6. Tube adapter according to Claim 5, **characterized in that** a rotation-preventing means is coordinated with the gear lever (31) for rendering eccentricities harmless and for preventing accidental rotation about its own axis.

7. Tube adapter according to any of Claims 1 to 4, **characterized in that** the gear comprises at least one or more spring-supported lever arm(s), at least one of which is connected approximately in the middle to the axis (8) of rotation of the pivotable deflection mirror (7), preferably the lever arm or one of the lever arms being connected at one end with spring force to the upper part (2) and at the other end with spring force to the lower part (1).

8. Tube adapter according to any of Claims 1 to 4 or 7, **characterized in that** the gear is in the form of a spring gear and comprises a leaf spring (17) which extends approximately perpendicularly to the pivot axis (8) and is supported at one end on the lower part (1) and at the other end on the upper part (2) symmetrically relative to the pivot axis (8) of the deflection mirror (7) and whose middle is fastened directly or indirectly to the deflection mirror (7).

9. Tube adapter according to either of Claims 5 and 6, **characterized in that** the gear lever (31) or at least one of the gear levers (31) is itself in the form of a leaf spring (17).

10. Tube adapter according to Claim 7 or 8, **characterized in that** the pivotable mirror (7) or the mirror support (15) thereof and/or at least one spring bearing (37) is mounted with little friction by suitable means - in particular ball bearings or needle bearings.

11. Tube adapter according to any of the preceding Claims, **characterized in that** at least one device for eliminating play and/or at least one possibility for adjustment for the elevation of the beam path (5) deflected by the two deflection mirrors (6, 7), in particular by a possibility for displacing a contact surface for a gear member - is coordinated with the gear, and/or that means for changing the inclination of the main axis (8) of rotation of the adapter are provided for adjusting the right-left deflection of the emerging beam path (5).

12. Tube adapter according to any of the preceding Claims, **characterized in that** the two deflection mirrors (6, 7) are so broad that they cover and deflect the two beam paths (5a,b) of a stereomicroscope.

## Revendications

1. Pièce intermédiaire tubulaire de rattrapage ou à enlever, qui comprend une entrée des rayons de la pièce intermédiaire à une partie inférieure (1) et une sortie des rayons de la pièce intermédiaire à une partie supérieure (2), ou l'angle entre l'entrée des rayons et la sortie des rayons peut être varié par un pivotement de la partie inférieure (1) relativement à la partie supérieure (2) autour d'un axe de pivotement (8) essentiellement horizontal, pour un microscope, la partie supérieure (2) comprenant un premier raccord de tube (4) pour l'attacher à une pièce de tube (13), tandis que la partie inférieure (1) comprend un deuxième raccord complémentaire (3) pour l'attacher à un corps de microscope (36), et ayant deux miroirs de déviation (6, 7) dans la marche des rayons (5) entre l'entrée des rayons de la pièce intermédiaire et la sortie des rayons de la pièce intermédiaire, dont au moins un (6 ou 7) peut pivoter en dépendance du pivotement de la partie supérieure (2) au moyen d'un mécanisme atour d'un angle réduit, **caractérisée en ce que** le microscope est un stéreomicroscope, et que la partie inférieure (1) et la partie supérieure (2) sont environ des dimensions égaux et, par conséquence, les dimensions extérieures de toute la pièce tubulaire dépassent seulement les dimensions extérieures de la zone de raccord de la pièce tubulaire (13) et du corps de microscope (36) par une mesure insignifiante, et que les deux miroirs de déviation (6, 7) sont disposés respectivement à la partie inférieure (1) et à la partie supérieure (2) ou les deux à la partie inférieure (1) ou les deux à la partie supérieure (2), et dont les surfaces réfléchissantes sont situées tellement proche l'une à l'autre, que l'espace entre les deux miroirs de déviation (6, 7) est libre des composants optiques, et que la distance entre les deux miroirs de déviation (6, 7) ne dépasse pas les dimensions extérieures des zones de raccord (13, 36).

2. Pièce intermédiaire tubulaire selon la revendication 1, **caractérisée en ce qu**'une lentille convexe ou positive (9) est disposé au côté d'entrée dans la marche des rayons (5) de la pièce intermédiaire pour réduire la marche optique, et au côté de la sortie une lentille concave ou négative (10), et/ou qu'un des miroirs de déviation (6, 7) est formé comme surface réfléchissante à un prisme (6a), qui de préférence est construit d'un matériau à haute réfringence, ce prisme (6a) étant préférablement attaché d'une manière rigide à la partie supérieure pivotante (2a, 2b, 2c).

3. Pièce intermédiaire tubulaire selon une quelconque des revendications précédentes, **caractérisée en ce que** l'axe de pivotement (8) de la partie supérieure (2) est disposé dans la surface réfléchissante d'un des miroirs de déviation (6, 7) - particulièrement dans celle du miroir de déviation pivotant (7) - l'axe de pivotement du miroir de déviation pivotant coïncidant préférablement avec l'axe de pivotement (8) de la partie supérieurem (2).

4. Pièce intermédiaire tubulaire selon une quelconque des revendications précédentes, **caractérisée en ce que** la liberté de mouvement de la partie inférieure (1) et de la partie supérieure (2) l'une à l'autre est freinée par un frein (14) - préférablement réglable -, et/ou qu'un ressort d'équilibrage de poids (28) est disposé entre la partie inférieure (1) et la partie supérieure (2) comme équilibrage de poids pour ceux masses de tube, qui arrivent à une position excentrique en vertu du réglage d'angle.

5. Pièce intermédiaire tubulaire selon une quelconque des revendications précédentes, **caractérisée en ce que** le mécanisme est formé comme mécanisme spatial à leviers comprenant un levier de mécanisme (31) situé dans une position de pivotement moyenne environ parallèlement à l'axe de pivotement (8), qu'une des extrémités dudit levier est logée sans jeu à la partie inférieure (1) et l'autre extrémité est logée sans jeu à la partie supérieure (2), le levier (31) étant prévu à son centre mécaniquement efficace d'un segment sphérique (34), qui est contacté par un palpeur d'angle (30), qui pivote le miroir de déviation (7) pivotant directement ou indirectement en dépendance d'un pivotement de la partie supérieure (2) par rapport à la partie inférieure (1).

6. Pièce intermédiaire tubulaire selon la revendication 5, **caractérisée en ce qu**'un moyen d'arrêt de rotation est associé au levier de mécanisme (31) pour la neutralisation des faux-ronds ou pour éviter une rotation accidentelle autour de son propre axe.

7. Pièce intermédiaire tubulaire selon une quelconque des revendications 1 à 4, **caractérisée en ce que** le mécanisme comprend au moins un ou plusieurs bras de levier élastiquement supporté(s), dont au moins un est relié environ d'une manière centrique à l'axe de rotation (8) du miroir de déviation (7) pivotant, un des extrémités du (d'un des) bras de levier étant préférablement relié à la partie supérieure (2) en étant commandé par l'influence d'un ressort, et l'autre extrémité étant relié à la partie inférieure (1) en étant commandé par l'influence d'un ressort.

8. Pièce intermédiaire tubulaire selon une quelconque des revendications 1 à 4 ou 7, **caractérisée en ce que** le mécanisme est construit comme mécanisme à ressort et comprend un ressort à lames (17), qui s'étend environ perpendiculairement à l'axe de pivotement (8), et qui est supporté avec un de ses extrémités à la partie inférieure (1) et avec l'autre extrémité à la partie supérieure (2) symétriquement à l'axe de pivotement (8) du miroir de déviation (7), et dont le centre est attaché directement ou indirectement au miroir de déviation (7).

9. Pièce intermédiaire tubulaire selon une quelconque des revendications 5 ou 6, **caractérisée en ce que** le (au moins un des) levier(s) de mécanisme (31) lui-même est formé comme ressort à lames (17).

10. Pièce intermédiaire tubulaire selon une quelconque des revendications 7 ou 8, **caractérisée en ce que le** miroir pivotant (7) ou son porte-miroir (15) et/ou au moins un appui à lames (37) est logé à faible friction par des moyens appropriés, particulièrement par un roulement à billes ou un roulement à aiguilles.

11. Pièce intermédiaire tubulaire selon une quelconque des revendications précédentes, **caractérisée en ce qu'**au moins un dispositif d'élimination de jeu et/ou au moins une possibilité de réglage de la direction d'hauteur de la marche des rayons (5) déviée par les deux miroirs de déviation (6, 7) - particulièrement par une possibilité de translatabilité d'une surface de contacte pour un membre du mécanisme - est associée au mécanisme, et/ou que des moyens de changement de l'inclinaison de l'axe de rotation principal (8) de la pièce intermédiaire sont prévus pour l'ajustage de la direction latérale de la marche des rayons sortant (5).

12. Pièce intermédiaire tubulaire selon une quelconque des revendications précédentes, **caractérisée en ce que** les deux miroirs de déviation (6, 7) ont une largeur de façon qu'il comprennent et dévient les deux marches des rayons (5a, b) d'un stéreomicroscope.
